**Europäisches Patentamt**

**European Patent Office**

**Office européen des brevets**

(19)

(11) Veröffentlichungsnummer: **0 143 924**

**A2**

(12) # EUROPÄISCHE PATENTANMELDUNG

(21) Anmeldenummer: **84111144.6**

(22) Anmeldetag: **19.09.84**

(51) Int. Cl.⁴: **C 08 J 5/18**
C 08 L 23/06, C 08 L 23/02
//(C08L23/06, 23:02)

(30) Priorität: **29.09.83 DE 3335206**

(43) Veröffentlichungstag der Anmeldung:
**12.06.85 Patentblatt 85/24**

(84) Benannte Vertragsstaaten:
**BE CH DE FR GB IT LI NL**

(71) Anmelder: **EC ERDÖLCHEMIE GMBH**
**Postfach 75 20 02**
**D-5000 Köln 71(DE)**

(72) Erfinder: **Stahlke, Kurt-Rainer, Dr.**
**865 Foxland Drive**
**Pittsburgh, Pa. 15243(US)**

(72) Erfinder: **Grünewald, Norbert**
**Am Katterbach 70**
**D-5060 Bergisch Gladbach 2(DE)**

(72) Erfinder: **Streib, Hugo, Dr.**
**Am Heckerhof 56**
**D-4150 Krefeld 1(DE)**

(74) Vertreter: **Dill, Erwin, Dr. et al,**
**c/o BAYER AG Zentralbereich Patente Marken und**
**Lizenzen Bayerwerk**
**D-5090 Leverkusen 1(DE)**

(54) **Mischungen aus Polyäthylen, Verfahren zu ihrer Herstellung und daraus erhaltene Folien.**

(57) Compounds aus 90 - 99,9 Gew.-% Hochdruckpolyethylen und 0,1 - 10 Gew.-% niedermolekularem amorphen Polyolefin sind geeignet zur Herstellung von Folien mit verbessertem Selbsthaftungseffekt. Die Folien können über die genannten Bestandteile hinaus Antifogmittel und/oder Stabilisatoren und/oder Gleitmittel und/oder Antiblockmittel enthalten.

EP 0 143 924 A2

EC Erdölchemie GmbH          Köln-Worringen
                            Ha/Kü-c

BEZEICHNUNG GEÄNDERT
siehe Titelseite
Compounds aus Hochdruckpolyethylen und niedermolekularem amorphen Polyolefin, das ein (Co)Monomeres mit
mindestens 3 C-Atomen enthält, Verfahren zu ihrer
Herstellung, ihre Verwendung zur Herstellung von
Folien und daraus erhaltene Folien

---

Die vorlegende Erfindung betrifft Compounds aus Hochdruckpolyethylen und niedermolekularem amorphen Polyolefin, ein Verfahren zur ihrer Herstellung, die Verwendung dieser Compounds zur Herstellung von selbsthaftenden Folien und die aus diesen Coumpounds erhaltenen
Folien.

Es ist bekannt, Hochdruckpolyethylene für Verpackungszwecke einzusetzen, wobei die guten Schweißeigenschaften
von Hochdruckpolyethylen dazu dienen, die verpackten
Güter durch Verschweißen der Folie zu schützen. Weiterhin können in einigen Fällen die Schrumpfeigenschaften
von Hochdruckpolyethylen zur Sicherung des Packgutes
ausgenutzt werden.

In der Praxis gibt es jedoch Anwendungen, bei denen
eine Verschweißung oder auch ein Einschrumpfen des
Packgutes nicht möglich ist, beispielsweise, weil

EC 147-Ausland

die zu verpackenden Güter die erhöhte Temperatur beim Verschweißen oder Einschrumpfen nicht vertragen. Dies kann beispielsweise bei der Transportsicherung solcher Güter auf Paletten (Verpackungs-Rundschau 25, 705 - 710 (1974)) oder auch beim Einschlagen leicht verderblicher Lebensmittel der Fall sein (Verpackungs-Rundschau 4, 344 ff. (1983)). In diesen Fällen kann durch Umwickeln, beispielsweise von Paletten, mit einer Streckfolie oder durch Einschlagen in eine Folie mit selbsthaftender Oberfläche (Lebensmittel) Abhilfe geschaffen werden. Für diese Anwendungen wird neben einer guten Transparenz eine gewisse Eigenhaftung des Packmittels (Folie gegen Folie) verlangt. Sollen Lebensmittel verpackt werden, werden Permeationseingeschaften, z.B. für Sauerstoff, zur Frischhaltung von portioniertem Frischfleisch gefordert. Weich-PVC-Folien erfüllen diese Permeationswerte, jedoch sind die hohen Anteile an Weichmachern, wie Dioctylphthalat oder Dioctyladipat, die 30 Gew.-% der Folie ausmachen können, mehrfach kritsch diskutiert worden (Plastic Engineering 10, 62 ff. (1973)). PVC ist weiterhin wegen seines Chlorgehaltes seit langem aus ökologischer Sicht erheblicher Kritik ausgesetzt.

Hochdruckpolyethylen(LDPE)-Folien zeigen im Vergleich zu Weich-PVC-Folien generell den Nachteil, daß sie keine Eigenhaftung von Folie gegen Folie beim Einschlagen von Packgütern aufweisen.

EC 147

Die Verbesserung der Eigenschaften von LDPE-Folien ist Gegenstand verschiedener Anmeldungen. So wird in der DE-OS 2 821 733 ein Einwickelfilm beschrieben, bei dem ein LDPE-Homopolymer durch den Zusatz von Polyisobutylen in seiner Eigenhaftung verbessert wird. Das Polyisobutylen wird jedoch nicht näher spezifiziert; außerdem ist eine Corona-Vorbehandlung unabdingbar. Weiterhin werden in der DE-OS 2 445 608 und DE-OS 2 524 867 Mischungen aus LDPE-Homopolymeren mit hydrierten Polycyclopentadienharzen oder hydrierten Mineralölfraktionen und/oder Polyisobutylen beschrieben, wobei weiterhin der Zusatz von Sorbitanmonolaurat als Antifogmittel für erforderlich gehalten wird.

Die beschriebenen Zusätze zur Verbesserung der Eigenhaftung haben alle den Nachteil, daß sie stark aus den Folien herausmigrieren. Entsprechende Folienrollen sind dann so stark klebrig, daß sie sich wegen übermäßiger Klebrigkeit nicht mehr handhaben lassen. Erfolgt eine Dosierung der Additive über Masterbatche, so zeigen diese für die Praxis eine nicht ausreichende Lagerstabilität und können daher nach einiger Zeit ebenfalls wegen des Verklebens nicht mehr eingesetzt werden.

Es wurden Compounds mit einem Gehalt von 90 - 99,9 Gew.-% eines oder mehrerer Hochdruckpolyethylene und einem Gehalt von 0,1 - 10 Gew.-% eines niedermolekularen amorphen Polyolefins, das ein (Co)Monomeres mit mindestens 3 C-Atomen enthält und eine Schmelzviskosität von 200 - 10 000 mPas (190°C) hat, gegebenen-

EC 147

falls mit darüberhinaus gehenden üblichen Gehalten an üblichen Antifogmitteln und/oder Antioxidantien und/oder Gleitmitteln und/oder Antiblockmitteln, gefunden.

Als Hochdruckpolyethylen (LDPE) seien sowohl solche Polymere verstanden, die neben dem Ethylen kein oder im wesentlichen kein anderes Monomeres enthalten, als auch Hochdruckpolyethylene mit einem Gehalt an vinylisch ungesättigten Comonomeren von höchstens 20 Gew.-% des LDPE.

Solche vinylisch ungesättgte Comonomere sind beispielsweise Vinylacetat, Vinylpropionat, Ethylacrylat und Butylacrylat, bevorzugt jedoch Vinylacetat (VA). Vinylisch ungesättigte Comonomere sind im LDPE mit einem Gehalt von beispielsweise 1 - 20 Gew.-%, bevorzugt 3 - 12 Gew.-%, besonders bevorzugt 4 - 10 Gew.-% enthalten. In bevorzugter Form werden Ethylen-Vinylace-tat-Copolymere (EVA) mit einem VA-Gehalt in den genannten Bereichen eingesetzt. In die erfindungsgemäßen Compounds können auch mehrere LDPE-Typen eingesetzt werden.

LDPE-Typen für die erfindungsgemäßen Compounds haben eine Dichte im Bereich von 0,910 - 0,940 g/cm³, bevorzugt 0,910 - 0,928, besonders bevorzugt 0,915 - 0,925 g/cm³ und einen Schmelzindex von 0,1 - 20 g/10 Minuten (190°C; 2,16 kp), bevorzugt 0,3 - 3, besonders bevorzugt 1,0 - 2,0 g/10 Minuten. Für den Fall der ebenfalls als LDPE bezeichneten oben angeführten Copolymeren wird häufig an Stelle der Dichte die sogenannte äquivalente Dichte angegeben. Diese äquivalente Dichte besagt, daß beispielsweise eine Folie aus einem Copolymer in der

EC 147

Steifigkeit etwa einer Folie gleicher Wanddicke aus
einem Ethylen-Homopolymerisat der genannten Dichte entspricht.

Als niedermolekulare amorphe Polyolefine kommen solche
in Betracht, die ein (Co)Monomeres mit mindestens 3
C-Atomen enthalten. Beispielhaft seien genannt: niedermolekulares ataktisches Polypropylen (APP), gegebenenfalls als Copolymeres mit Ethylen und/oder Buten oder
Methylbuten; Copolymere aus Butenen mit Ethylen und/oder
Methylbutenen; Polymere aus Methylbutenen, gegebenenfalls als Copolymeres mit Ethylen. Solche niedermolekularen amorphen Polyolefine sind übliche Handelsprodukte.

In Übereinstimmung mit den Befunden der obengenannten
Patentschriften wurden reine (iso-)Buten-Polymere als
ungeeignet erkannt. Diese sind daher hier ausdrücklich
ausgenommen.

In bevorzugter Weise wird als niedermolekulares amorphes
Polyolefin ein APP eingesetzt. Im folgenden wird daher
hauptsächlich auf APP Bezug genommen, wenn auch an seine
Stelle die anderen genannten Polyolefine treten können.
Die Schmelzviskosität der niedermolekularen amorphen
Polyolefine liegt bei 200 - 10000 mPas, bevorzugt bei
200 - 6000 mPas und bei APP besonders bevorzugt bei
400 - 1000 mPas, gemessen bei 190°C im Rotationsviskosimeter.

Als APP kann beispielsweise ein solches Polypropylen eingesetzt werden, das kein oder im wesentlichen kein Como-

EC 147

nomeres einpolymerisiert enthält. Es kann jedoch auch ein Propylen-Ethylen-Copolymeres mit einem Ethylenanteil von beispielsweise 2 - 30 Gew.-%, bezogen auf die Gesamtmenge der Comonomeren, bevorzugt 3 - 15 Gew.-%, besonders bevorzugt 5 - 10 Gew.-% Ethylen enthält, eingesetzt werden. Bevorzugt wird ein APP, das im wesentlichen kein Comonomeres enthält, für die erfindungsgemäßen Compounds eingesetzt. APP hat eine Dichte bei 23°C von 0,80 - 0,98 g/cm³, bevorzugt 0,84 - 0,88 g/cm³, sowie einen Erweichungspunkt nach DIN 1995 U 4 von < 130°C.

Das LDPE liegt in den erfindungsgemäßen Compounds in einer Menge von 90 - 99,9 Gew.-%, bevorzugt 95 - 99,5 Gew.-% und besonders bevorzugt 97 - 99,2 Gew.-% vor. Das niedermolekulare ataktische Polypropylen liegt in einer Menge von 0,1 - 10 Gew.-%, bevorzugt 0,5 - 5 Gew.-%, besonders bevorzugt 0,8 - 3 Gew.-% vor, wobei alle Angaben auf die Summe von LDPE und niedermolekularen ataktischem Polypropylen bezogen sind. Über diese genannten Gehalte hinaus können die erfindungsgemäßen Compounds zusätzlich übliche Gehalte an üblichen Antifogmitteln, wie Sorbitanmonolaurat oder Sorbitanmonopalmitat, und/oder Autioxydantien wie Octadecyl-3-(3,5-di-tert.butyl-4-hydroxyphenyl)-propionat oder Distearyl-pentaerythrit-diphosphit, und/oder Gleitmittel, wie Erucasäureamid oder Ölsäureamid, und/oder Antiblockmittel, wie Siliciumdioxid, enthalten. Für die Antifogmittel sei ein Gehalt von 0,2 - 3,0 ,bevorzugt 0,2-1,5 Gew.-%, bezogen auf das gesamte Compound, genannt. Die Stabilisatoren und/oder

EC 147

Gleitmittel und/oder Antiblockmittel können gegebenenfalls zur Feineinstellung der in der Praxis gewünschten Eigenschaften, beispielsweise in Mengen bis 0,2 Gew.-%, eingesetzt werden.

Die Erfindung betrifft ferner ein Verfahren zur Herstellung der oben beschriebenen Compounds mit einem Gehalt von 90 - 99,9 Gew.-% eines oder mehrerer Hochdruckpolyethylene und einem Gehalt von 0,1 - 10 Gew.-% eines obengenannten, niedermolekularen amorphen Polyolefins, gegebenenfalls mit darüberhinaus gehenden Gehalten an üblichen Antifogmitteln und/oder Antioxidantien und/oder Gleitmitteln und/oder Antiblockmitteln, das dadurch gekennzeichnet ist, daß man die genannten Ausgangsmaterialien durch Coextrusion miteinander mischt.

Hierbei kann man so verfahren, daß bei der Extrusion des LDPE im Anschluß an seine Herstellung über einen Satellitenextruder oder eine Dosierpumpe das niedermolekulare amorphe Polyolefin eingearbeitet wird. Hierbei wird das erfindungsgemäße Compound in Form eines üblichen Granulats erhalten. Man kann jedoch auch zunächst ein Masterbatch des niedermolekularen amorphen Polyolefinsmit einem Gehalt von 20 - 60 Gew.-%, bevorzugt 25 - 50 Gew.-%, besonders bevorzugt 25 - 40 Gew.-% an solchem Polyolefin herstellen. Der Rest zu 100 % und damit die Basis des Masterbatches besteht aus einem anderen Polyolefinharz, bevorzugt dem Hochdruckpolyethylen, das dem erfindungsgemäßen Compound zugrunde liegt. Ein solches Masterbatch kann ebenfalls, beispielsweise über

EC 147

einen Satellitenextruder, dem LDPE in der Endphase in seiner Herstellung zugesetzt werden, wobei man auch hier ein Granulat des erfindungsgemäßen Compounds erhält. Das Arbeiten mit einem Masterbatch ist gegenüber dem Arbeiten mit dem reinen niedermolekularen amorphen Polyolefin bevorzugt, weil es Vorzüge bringt, wie höhere Genauigkeit in der Dosierung. Solche erhaltenen Granulate können sodann beispielsweise zu Folien weiterverarbeitet werden, indem diese Granulate erneut aufgeschmolzen und über einen Ringspalt oder einen Breitspalt extrudiert werden. Es ist jedoch auch möglich das niedermolekulare amorphe Polyolefin als solches oder in Form des genannten Masterbatches erst bei diesem erneutem Aufschmelzen und Extrudieren zuzusetzen. Auch die oben genannten weiteren Zusätze können in Form eines Masterbatches zugesetzt werden.

Die Extrusion der erfindungsgemäßen Compounds über Extruder mit Breitschlitz zu Flachfolie oder über Extruder mit Ringspalten zu Blasfolien ist ein wichtiges Anwendungsgebiet. Die Erfindung betrifft daher weiterhin die Verwendung der oben beschriebenen Compounds zu Folien und die aus den oben beschriebenen Compounds hergestellten Folien, wobei bevorzugt APP eingesetzt wird.

Folien aus den oben beschriebenen Compounds zeichnen sich durch gute Transparenz, gute Eigenhaftung und gute Lagerstabilität aus. Die Folien können daher mit Erfolg für die Herstellung von Streckfolien mit guten elastischen Eigenschaften und einem guten

EC 147

Selbsthafteffekt Verwendung finden. Die erfindungsgemäßen Folien eignen sich weiterhin zum Einschlagen von portionierten Lebensmitteln, wie Obst, Gemüse, Molkereiprodukten oder auch Frischfleisch und Fleischprodukten (Einschlagen von Hand oder Maschine). Hierbei kommt es neben der guten Transparenz und dem guten Selbsthafteffekt weiterhin auf günstige Permeationswerte, beispielsweise für Sauerstoff und für Wasserdampf, an. Diese Permeationswerte (Migrationswerte) sind in den BGA-Empfehlungen I, Abschnitt 3c beschrieben (BGA= Bundesgesundheitsamt).

Besonders wichtig sind die Permeationswerte beim Einschlagen von portioniertem Frischfleisch. Für den Selbsthafteffekt werden in der Praxis Haftungswerte von 6 N/9 cm² (gemessen nach der weiter unten beschriebenen Methode) als Untergrenze verlangt. Die erfindungsgemäßen Folien erreichen Haftungswerte von mindestens 7 N/9 cm² (Folie gegen Folie). Es ist selbstverständlich möglich, den Hafteffekt durch eine einseitige Corona-Vorbehandlung zu verstärken.

Die erfindungsgemäßen Folien weisen ferner eine Sauerstoffdurchlässigkeit von mehr als 20 000 Normalcubikzentimeter pro Quadratmeter pro Tag und pro bar $(Ncm^3 . m^{-2} . d^{-1} . bar^{-1})$ auf.

Die erfindungsgemäßen Folien sind frei von Weichmachern, wie sie im PVC üblich sind. Damit entfallen alle Probleme, die bei Weich-PCV-Folien mit etwa 30 % Weichmacher bestehen.

EC 147

Beispiele 1 - 6

Die in der Tabelle 1 angegebenen Polymeren wurden auf einer dampfbeheizten 5 kg-Walze bei 130°C compoundiert. Als LDPE-Komponente wurde ein EVA-Copolymeres mit dem in der Tabelle angegebenen Schmelzindex, Vinylacetat-Gehalt und mit einer äquivalenten Dichte von 0,910 g/cm³ eingesetzt. Als Additiv wurde in den Erfindungsbeispielen 2, 3 und 4 ein niedermolekulares ataktisches Polypropylen (APP) mit einer Dichte von 0,86 g/ccm² und einer Schmelzviskosität von 400 - 1000 mPas (190°C; Rotationsviskosimeter) eingesetzt. Die erhaltenen Walzfelle werden auf einem Göttfert-Extruder granuliert und auf einem Reifenhäuser-RH-60-Folienblasextruder zu Blasfolien, die vor dem Aufwickeln geschnitten wurden, extrudiert.

Extrusionsdaten:

| | |
|---|---|
| Drehzahl: | 120 U/min |
| Schnecke: | SM-Schnecke |
| Ausstoß: | 60 - 70 kg pro Stunde |
| Aufblasverhältnis: | 1:2,5 |
| Spaltweite: | 0,8 mm |
| Kopf: | 250 mm Durchmesser |
| Temperatur-Profil (°C): | 140, 150, 160, 160, 160 (Siebpaket), 160 (Blaskopf) |

EC 147

Zur Prüfung der Scherkraft werden zwei 30 mm breite Folienstreifen so übereinander gelegt, daß sie auf einer Fläche von 30 mm x 30 mm überlappen. Die Folien liegen auf einer ebenen Auflage und werden durch zweimaliges Überrollen mit einer Hartgummiwalze mit einer Kraft von 3 kp festgedrückt. In einem Zugversuch auf einer Zwick-Reißmaschine werden die Scherkräfte ermittelt. Die Werte sind in Tabelle 1 aufgeführt. Weitere Eigenschaften finden sich in Tabellen 2 und 3. Die Beispiele 1, 5 und 6 sind Vergleichsbeispiele.

EC 147

Tabelle 1

## Scherkräfte von Verpackungsfolien

| Beispiel | Polymer | MI[1] (g/10 min) | VA[2] (%) | Additiv | Dicke (µm) | Scherkraft (N/9 cm²[3]) |
|---|---|---|---|---|---|---|
| 1 | Copo[4] | 1,5 | 8,5 | - | 20 | 4,5 - 5,5 |
| 2 | Copo | 1,5 | 8,5 | 1 % APP | 20 | 7 - 8 |
| 3 | Copo | 1,5 | 8,5 | 3 % APP | 20 | 9 - 11 |
| 4 | Copo | 1,5 | 8,5 | 5 % APP | 20 | 10 - 13 |
|  |  |  |  |  | 25 | 12 - 14 |
| 5 | Copo[4] | 0,35 | 12 | - | 20 | 4,5 - 7 |
| 6 | PVC[4] | 5) | - | 30 % DOA[6] | 17 | 5,0 |

1) MI = Schmelzindex

2) VA = Vinylacetat-Gehalt

3) Prüfmethode s. Text

4) Vergleichsbeispiel

5) Messung des MI nicht durchführbar

6) Dioctyladipat

0143924

Tabelle 2

Mechanische Eigenschaften von Verpackungsfolien

| Bei-spiel | Reißfestigkeit (MPa) längs    quer DIN 53455 | | Reißdehnung (%) längs    quer DIN 53455 | | Weiterreiß-festigkeit (MPa) DIN 53356 | Schock-festigkeit (J) DIN 53373 | Hysteresse bei 10 % Vordehnung (MPa/%) längs    quer | | Hysteresse bei 20 % Vordehnung (MPa/%) längs    quer | |
|---|---|---|---|---|---|---|---|---|---|---|
| 1 | 26,1 | 21 | 150 | 560 | 63,7 | 0,30 | 2,8/0,95 | 1,7/1,8 | 3,5/2,8 | 1,8/2,7 |
| 3 | 27,2 | 19,5 | 146 | 533 | 52,1 | · 0,28 | 2,4/1,12 | 1,6/1,6 | 3,2/2,5 | 1,7/2,7 |
| 6 | 26,6 | 29,0 | 210 | 253 | 40,2 | 0,60 | 4,6/1,6 | 3,1/2,1 | 6,9/1,8 | 4,7/2,3 |

Tabelle 3

Permeationswerte von Verpackungsfolien

| Beispiel | Wasserdampf-durchlässigkeit $\frac{g}{m^2\ d}$ DIN 53122 | Sauerstoff-durchlässigkeit $\frac{cm^3}{m^2\ d\ bar}$ DIN 53536 | Glanz (SKT) ASTM 2457 | Transparenz (%) ASTM 1003 | Trübung (%) ASTM 1003 |
|---|---|---|---|---|---|
| 1 | 22,5 | 24550 | 80 | 91,6 | 6 |
| 3 | 20,2 | 24000 | 70 | 91,6 | 4 |
| 6 | 144,5 | 10450 | 98 | 91,3 | 4,9 |

0143924

Patentansprüche

1. Compounds mit einem Gehalt von 90 - 99,9 Gew.-%
eines oder mehrerer Hochdruckpolyethylene und
einem Gehalt von 0,1 - 10 Gew.-% eines niedermolekularen amorphen Polyolefins, das ein (Co)Monomeres mit mindestens 3 C-Atmonen enthält und eine
Schmelzviskosität von 200 - 10000 mPas (190°C) hat,
gegebenenfalls mit darüberhinaus gehenden üblichen
Gehalten an üblichen Antifogmitteln und/oder Antioxidantien und/oder Gleitmitteln und/oder Antiblockmitteln.

2. Compounds nach Anspruch 1 mit 95 - 99,5 Gew.-%
Hochdruckpolyethylen und 0,5 - 5 Gew.-% niedermolekularem amorphen Polyolefin.

3. Compounds nach Ansprüchen 1 bis 2, dadurch gekennzeichnet, daß als Hochdruckpolyethylen
ein Ethylen-Vinylacetat-Copolymeres mit einem
Vinylacetat-Gehalt von 1 - 20 Gew.-%, bezogen
auf das Gesamtgewicht des Copolymeren, eingesetzt wird.

4. Compounds nach Ansprüchen 1 und 2, dadurch gekennzeichnet, daß das niedermolekulare amorphe Polyolefin ein niedermolekulares ataktisches Polypropylen
ist, das gegebenenfalls neben dem Propylen noch
2 - 30 Gew.-% der Gesamtmenge der Monomeren an Ethylen copolymerisiert enthält.

EC 147

5. Compounds nach Ansprüchen 1 bis 4, dadurch gekennzeichnet, daß das niedermolekulare ataktische Polypropylen im wesentlichen frei von Comonomeren ist.

6. Verfahren zur Herstellung von Compounds mit einem Gehalt von 90 - 99,9 Gew.-% eines oder mehrerer Hochdruckpolyethylene und einem Gehalt von 0,1 - 10 Gew.-% eines niedermolekularen amorphen Polyolefins, das ein (Co)Monomeres mit mindestens 3 C-Atomen enthält und das eine Schmelzviskosität von 200 - 10000 mPas (190°C) hat, gegebenenfalls mit darüber hinausgehenden üblichen Gehalten an üblichen Antifogmitteln und/oder Antioxidantien und/oder Gleitmitteln und/oder Antiblockmitteln, dadurch gekennzeichnet, daß man die genannten Ausgangsmaterialien durch Coextrusion miteinander mischt, wobei man gegebenenfalls das niedermolekulare amorphe Polyolefin und/oder die genannten Antifogmittel und/oder Antioxidantien und/oder Gleitmitteln und/oder Antiblockmittel einzeln oder gemeinsam als Masterbatches einsetzt.

7. Verwendung der Compounds nach Anspruch 1 zur Herstellung von Folien mit verbessertem Selbsthafteffekt.

8. Verwendung der Compounds nach Anspruch 1 zur Herstellung von Einwickelfolien für portioniertes Frischfleisch.

EC 147

9. Folien mit verbessertem Selbsthafteffekt aus Compounds mit einem Gehalt von 90 - 99,9 Gew.-% eines oder mehrerer Hochdruckpolyethylene und einem Gehalt von 0,1 - 10 Gew.-% eines niedermolekularen amorphen Polyolefins, das ein (Co)Monomeres mit mindestens 3 C-Atomen enthält und das eine Schmelzviskosität von 200 - 10000 mPas (190°C) hat, gegebenenfalls mit darüber hinausgehenden üblichen Gehalt an üblichen Antifogmitteln und/oder Antioxidantien und/oder Gleitmitteln und/oder Antiblockmitteln.

10. Folie nach Anspruch 9, dadurch gekennzeichnet, daß das niedermolekulare amorphe Polyolefin ein ataktisches Polypropylen ist, das gegebenenfalls neben dem Propylen noch 2 - 30 Gew.-% der Gesamtmenge der Monomeren an Ethylen copolymerisiert enthält.

EC 147